# EUROPÄISCHE PATENTANMELDUNG

(11) **EP 1 462 333 A1**
(43) Veröffentlichungstag der Anmeldung: **29.09.2004**
(21) Anmeldenummer: 04002528.0
(22) Anmeldetag: 05.02.2004
(51) Int. Cl.: B61L 15/00, H04L 12/24, B61K 9/12

(54) **Verfahren und Vorrichtung zur Erkennung der Radsatzreihenfolge in einem Zug**

(30) Priorität: 29.03.2003 DE 10314316
(71) Anmelder: ATLAS ELEKTRONIK GMBH, D-28305 Bremen (DE)
(72) Erfinder: Weyand, Julius, 28357 Bremen (DE); Renken, Klaus, 28857 Syke (DE)

(57) **Zusammenfassung**

Es wird ein Verfahren und eine Vorrichtung zur Erkennung der Radsatzreihenfolge innerhalb eines schiengebundenen Zugs (10) angegeben, der aus beliebig aneinander ankoppelbaren, jeweils mit mindestens zwei Radsätzen (14, 15) ausgestatteten einzelnen Waggons (12) zusammengestellt ist. Jedem Radsatz (14, 15) eines Waggons (12) ist eine Identifikations-Marke zugeordnet. Von den Radsätzen (14, 15) wird aufeinanderfolgend ein von einem in der Reihenfolge vorhergehendem Radsatz (15, 14) erhaltenes Datentelegramm mit der Identifikations-Marke des Radsatzes (14, 15) ergänzt und an den nachfolgenden Radsatz (14, 15) übergeben. Das ursprüngliche Datentelegramm wird von einer Zentralstelle (26) an den ersten Radsatz (14, 15) im Zug (10) übergeben und das um die Identifikations-Marken aller Radsätze (14, 15) erweiterte Datentelegramm wird vom letzten Radsatz (15) im Schienenbahnzug (10) an die Zentralstelle (26) zurückgesandt

## Beschreibung

Die Erfindung betrifft ein Verfahren und eine Vorrichtung zur Erkennung der Radsatzreihenfolge innerhalb eines schienengebundenen Zugs, der aus beliebig aneinander ankoppelbaren, jeweils mit mindestens zwei Radsätzen ausgestatteten, einzelnen Waggons zusammengestellt ist.

Unter Radsatz wird hier die Zusammenfassung von mehreren Rädern in einem Modul verstanden, der einachsig oder mehrachsig sein kann. Mehrachsige, vorzugsweise zweiachsige Module sind üblicherweise in einem sog. Drehgestell integriert und damit drehbar am Waggon gehalten. Für einen solchen Fall wird hier der Begriff Radsatz synonym für ein Drehgestell verwendet.

Für die Sicherheit im Schienenverkehr ist es unerlässlich, Schäden, die zu erheblichen Betriebsstörungen oder gar zu Unfällen mit Personengefährdung führen können, rechtzeitig zu erkennen. Solche Schäden treten sowohl am Zug, und hier in den einzelnen Radsätzen oder in den die Radsätze tragenden Dreh- oder Fahrgestellen von Waggons und Zugmaschine, als auch an der Gleisstrecke, z.B. am Gleiskörper oder im Oberbau, auf.

Bei einem bekannten Verfahren zur Erkennung von Schäden im Schienenverkehr von Zügen, insbesondere Hochgeschwindigkeitszügen (DE 198 52 220 A1), bei denen das Fahrwerk eines Waggons mindestens zwei Drehgestelle mit jeweils einem mehrachsigen Radsatz aufweist, wird aus den Ausgangssignalen von mehreren, jeweils einem Drehgestell zugeordneten Schallaufnehmern ein Drehgestell-Geräuschmuster gebildet, in dem das Geräusch oder sein Frequenzspektrum als Funktion der Zeit abgelegt ist. Jedes Drehgestell-Geräusch wird auf zeitliche Veränderung überwacht, und die zeitlichen Veränderungen in einer Anzahl von Drehgestell-Geräuschmustern, die im Zug aufeinanderfolgenden Drehgestellen zugehörig sind, werden miteinander verglichen und bewertet. Durch diese Musteranalyse werden Rückschlüsse auf die Art und Qualität eines im Zug oder an der Gleisstrecke auftretenden Schadens gezogen und in einem Störverzeichnis in Zuordnung entweder zum Gleisstreckenabschnitt oder zum geschädigten Drehgestell abgelegt. Dabei wird zusätzlich verifiziert, welches Rad des defekten Drehgestells den Schaden aufweist.

Die Durchführung dieses Verfahrens setzt voraus, dass die Reihenfolge der Drehgestelle im Zug bekannt ist. Dies ist bei Zügen, die immer die gleiche Konfiguration der Waggons aufweisen und lediglich die Fahrtrichtung ändern, relativ problemlos, da die Drehgestelle bzw. die Radsätze immer in der gleichen Reihenfolge angeordnet sind und lediglich bei Fahrtrichtungsänderung die Reihenfolge vertauscht werden muss. Bei schienengebundenen Zügen, die häufig neu zusammengestellt und dabei die einzelnen Waggons nach Rangieren beliebig aneinandergekoppelt werden, sind die Drehgestelle bzw. die Radsätze in recht unterschiedlicher Anordnung zueinander innerhalb des Zuges platziert.

Der Erfindung liegt die Aufgabe zugrunde, ein Verfahren und eine Vorrichtung anzugeben, mit dem die Reihenfolge der Radsätze innerhalb eines schienengebundenen Zugs nach beliebigem Zusammenstellen der Waggons zuverlässig erkannt wird.

Die Aufgabe ist erfindungsgemäß durch die Merkmale im Anspruch 1 bzw. im Anspruch 8 gelöst.

Das erfindungsgemäße Verfahren und die erfindungsgemäße Vorrichtung haben den Vorteil, dass jedem Radsatz bzw. Drehgestell seine Platznummer in dem individuell zusammengestellten Zug zugewiesen wird und diese Platznummer bei der Auswertung der Drehgestell-Geräuschmuster und des Zug-Geräuschmusters abgerufen werden kann. Dadurch kann einerseits zuverlässig erkannt werden, ob Anomalien in den Geräuschmustern auf Schädigungen in den Radsätzen oder auf Schädigungen in der Gleisstrecke zurückzuführen sind, und können andererseits festgestellte Schädigungen in den Radsätzen dem richtigen Radsatz bzw. Drehgestell zugeordnet und zuordnungsrichtig im Störverzeichnis protokolliert werden.

Zweckmäßige Ausführungsformen des erfindungsgemäßen Verfahren mit vorteilhaften Weiterbildungen und Ausgestaltungen der Erfindung ergeben sich aus den Ansprüchen 2 - 7.

Zweckmäßige Ausführungsformen der erfindungsgemäßen Vorrichtung mit vorteilhaften Weiterbildungen und Ausgestaltungen der Erfindung ergeben sich aus den Ansprüchen 9 - 15.

Die Erfindung ist anhand eines in der Zeichnung illustrierten Ausführungsbeispiels im folgenden näher beschrieben. Es zeigen jeweils in schematischer Darstellung:
- Fig. 1: ausschnittweise einen aus aneinandergekoppelten Waggons bestehenden, schienengebundenen Zug,
- Fig. 2: ein Ausführungsbeispiel für die Verbindungsstelle II in Fig. 1,
- Fig. 3: ein weiteres Ausführungsbeispiel für die Verbindungsstelle II in Fig. 1,
- Fig. 4: eine schematische Darstellung eines Zugs mit vier geordnet aneinandergekoppelten Waggons,
- Fig. 5: der gleiche Zug mit den gleichen vier, jedoch nach Rangierbetrieb ungeordnet zusammengekoppelten Waggons,
- Fig. 6: eine in einer Zentralstelle erstellte Zuordnungstabelle für die Reihenfolge der Radsätze im Zug.

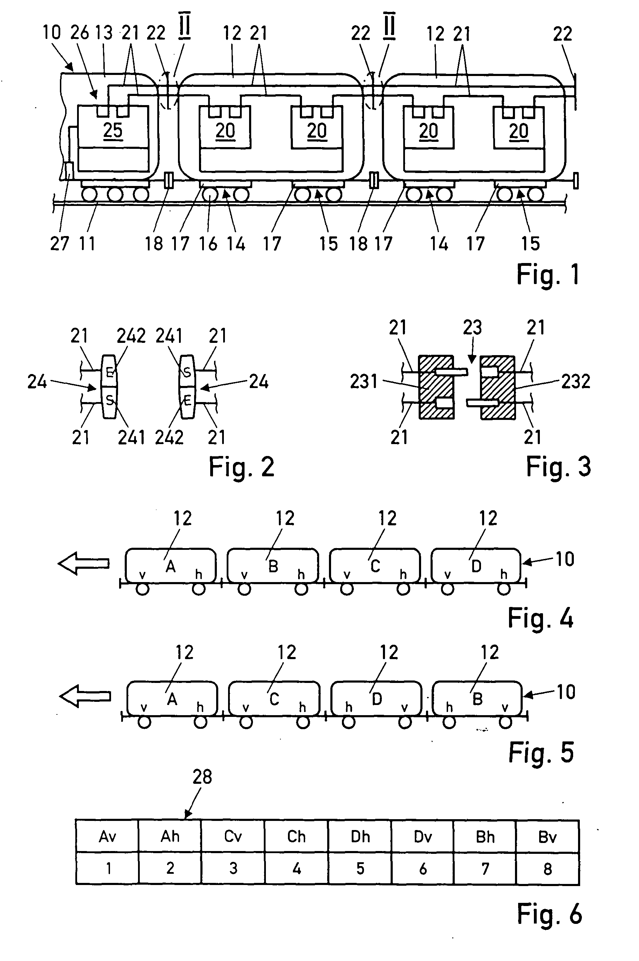

Der in Fig. 1 schematisch skizzierte schienengebundene Zug 10, der auf einer Gleisstrecke 11 läuft, ist aus mehreren aneinandergekoppelten Waggons 12 zusammengestellt, wobei der vorderste Waggon 12 an eine Zugmaschine 13, z.B. eine Elektro- oder Diesellok, angekoppelt ist. Im Ausführungsbeispiel der Fig. 1 sind zwei Waggons 12 sowie die Zugmaschine 13, letztere nur abschnittweise, dargestellt. Das Fahrwerk eines jeden Waggons 12 besitzt zwei Radsätze 14 und 15. Jeder Radsatz 14 bzw. 15 weist zwei Radachsen und damit insgesamt vier Räder 16 auf. Üblicherweise ist ein zweiachsiger Radsatz 14 bzw. 15 in einem Drehgestell 17 angeordnet. Ein Radsatz 14 kann auch mehrere Radachsen oder auch nur eine Radachse aufweisen. Im letzten Fall entfällt das Drehgestell. Die Ankopplung der Waggons 12 erfolgt in üblicher Weise mittels mechanischer Kupplungen 18.

Innerhalb eines Waggons 12 ist jedem Radsatz 14 bzw. 15 ein Mikrocomputer 20 zugeordnet. Jedem Mikrocomputer 20 ist eine den Radsatz 14 bzw. 15 kennzeichnende Identifikations-Marke, im folgenden Identifikations-Nummer oder kurz Ident-Nummer genannt, zugewiesen. Alle Mikrocomputer 20 im Zug 10 kommunizieren über Datenübertragungsstrecken miteinander. Im Ausführungsbeispiel der Fig. 1 sind die Datenübertragungsstrecken als Datenleitungen 21 aus Kupfer oder Fiberglasfasern ausgeführt, die zwischen den innerhalb eines Waggons 12 angeordneten Mikrocomputern 20 fest verlegt sind und zwischen den Mikrocomputern 20 aneinandergekoppelter Waggons 12 in einer Schnittstelle 22 zwischen den Waggons 12 auftrennbar sind. Die Schnittstelle 22 kann beispielsweise als Verbindungsstecker 23 ausgeführt werden, wie er schematisch in Fig. 3 dargestellt ist. Von jedem Verbindungsstecker 23 ist eine identische Steckerhälfte 231, 232 an einem Ende des Waggons 12 angeordnet. Nach Zusammenkopplung zweier Waggons 12 werden die einander zugekehrten Steckerhälften 231, 232 miteinander verbunden. Vor Abkoppeln eines Waggons 12 werden die Steckerhälften 231, 232 voneinander getrennt.

Um die manuell vorzunehmende Kopplung und Entkopplung der Datenleitungen 21 zwischen den Waggons 12 in den Schnittstellen 22 zu vermeiden, werden die Datenübertragungsstrecken zwischen den Waggons 12 als Daten-Funkstrecken ausgebildet. Hierzu ist an jeder Stirnseite eines Waggons 12 eine in Fig. 2 schematisch skizzierte Sende-/Empfangseinheit 24, bestehend aus einem Sender 241 und einem Empfänger 242, angeordnet. Die Sende-/Empfangseinheit 24 ist jeweils über eine feste Datenleitung 21 mit einem Mikrocomputer 20 verbunden. Bei aneinandergekoppelten Waggons 12 sind die Sende-/Empfangseinheiten 24 der Waggons 12 einander zugekehrt, so dass zwischen den Waggons 12 ein Sende- und Empfangsbetrieb stattfinden kann.

In der Zugmaschine 13 ist ein Zentralrechner 25 installiert, der über eine die Schnittstelle II enthaltende Datenübertragungsstrecke mit dem an ihm angekoppelten Waggon 12 verbunden ist. Die Datenübertragungsstrecke ist wiederum als Funkstrecke mit Sende-/Empfangseinheit 24 oder als Datenleitung 21 mit Verbindungsstecker 23 ausgebildet. Durch die entsprechende Anordnung der Datenleitungen 21 in den einzelnen Waggons 12 ist der dem vordersten Radsatz 14 des ersten Waggons 12 im Zug 10 zugeordnete erste Mikrocomputer 20 mit dem Zentralrechner 25, jeder folgende Mikrocomputer 20 mit dem vorhergehenden Mikrocomputer 20 und der dem letzten Radsatz 15 des letzten Waggons 12 im Zug 10 zugeordnete letzte Mikrocomputer 20 wiederum mit dem Zentralrechner 25 verbunden. Der Zentralrechner 25 stellt eine Zentralstelle 26 im Zug 10 dar, in der alle Informationen zusammenlaufen und entsprechende Auswertungen der Informationen vorgenommen werden.

Wie eingangs beschrieben ist, ist es für ein Verfahren zur Erkennung von während der Fahrt des Zugs 10 auftretenden Schäden an den Radsätzen 14, 15 oder von an der momentan befahrenen Gleisstrecke vorhandenen Schäden von wesentlicher Bedeutung, dass die Reihenfolge der Radsätze 14, 15 an den einzelnen Waggons 12 innerhalb des Zugs 10 in der Zentralstelle 26, also dem Zentralrechner 25, bekannt sind, damit dort Schäden erkannt, analysiert, den einzelnen Radsätzen 14, 15 oder dem Streckenabschnitt der momentan befahrenen Gleisstrecke zugeordnet und ggf. Maßnahmen zur Aufrechterhaltung der Betriebssicherheit ausgelöst werden können. Nach Zusammenstellen der einzelnen Waggons 12 zu dem Zug 10 und mit Aufnahme der Erstfahrt des Zugs 10 wird daher die Reihenfolge der im Zug 10 aneinandergekoppelten Waggons 12 nach folgendem Verfahren festgestellt:

In der Zentralstelle 26 erzeugt der Zentralrechner 25 ein Datentelegramm, das er über die Datenübertragungsstrecken, hier über die Datenleitungen 21 und/oder die Sende/Empfangseinheiten 24, dem im folgenden Waggon 12 ersten Radsatz 14 übergibt. Der diesem Radsatz 14 zugeordnete Mikrocomputer 20 empfängt dieses Datentelegramm und fügt aufgrund eines im Datentelegramm enthaltenen Steuerbefehls seine Ident-Nummer dem Datentelegramm hinzu. Das um die Ident-Nummer erweiterte Datentelegramm wird dem folgenden Radsatz 15 übergeben und dort von dem diesem Radsatz 15 zugeordneten Mikrocomputer 20 um dessen Ident-Nummer erweitert. Das Datentelegramm, das nunmehr bereits zwei Ident-Nummern in der den Radsätzen 14, 15 entsprechenden Reihenfolge enthält, wird dem folgenden Radsatz 14 im nachfolgend angekoppelten Waggon 12 übergeben. Der diesem Radsatz 14 zugeordnete Mikrocomputer 20 setzt wiederum seine Ident-Nummer hinzu und übergibt das Datentelegramm an den Mikrocomputer 20 des folgenden Radsatzes 15. Dieser Vorgang wird solange fortgesetzt, bis das Datentelegramm um alle Ident-Nummern der im Zug 10 vorhandenen Radsätze 14, 15 ergänzt ist. Dieses vollständig ergänzte Datentelegramm wird vom letzten Radsatz 15 im Zug 10, genauer gesagt von dem diesen Radsatz 15 zugeordneten Mikrocomputer 20, dem Zentralrechner 25 in der Zentralstelle 26 übergeben. Nach Zusammenstellung des Zugs 10 ist dem Zentralrechner 25 die Anzahl der zum Zug 10 zusammengekoppelten Waggons 12 und der jeweilige Waggontyp eingegeben worden, so dass dem Zentralrechner 25 die Gesamtzahl der im Zug 10 vorhandenen Radsätze 14, 15 bekannt ist. Der Zentralrechner 25 vergleicht nunmehr die Gesamtzahl der Radsätze 14, 15 mit der Anzahl der im erhaltenen Datentelegramm vorhandenen Ident-Nummern. Stimmen beide nicht überein, so wird eine Fehlermeldung ausgegeben. Stimmen beide überein, so erstellt der Zentralrechner 25 eine Zuordnungstabelle 28 (Fig. 6), in der die Ident-Nummern in der durch die Fahrtrichtung festgelegten Reihenfolge der Radsätze 14, 15 im Zug 10 angeordnet sind. Die Fahrtrichtung ermittelt der Zentralrechner 25 mit Hilfe eines bidirektionalen Beschleunigungssensors 27, der in Längsrichtung z.B. in der Zugmaschine 13, installiert ist. Die ermittelte Fahrtrichtung wird dadurch verifiziert, dass festgestellt wird, ob Fahrgeräusche vorhanden sind oder nicht. Wird das Vorhandensein von Fahrgeräuschen über mehrere Sekunden hinweg gemessen, so liegt die Fahrtrichtung - wie ermittelt - fest.

In Fig. 4 ist beispielhaft ein schienengebundener Zug 10 mit vier Waggons 12 schematisiert dargestellt, wobei die Waggons 12 geordnet aneinander angekoppelt sind. Die Waggons 12 sind beispielhaft durch die Buchstaben A, B, C und D gekennzeichnet. Jeder Waggon 12 hat einen vorderen Radsatz 14 und einen hinteren Radsatz 15. Im Beispiel der Fig. 4 weist jeder Radsatz 14, 15 nur eine Radachse auf. Jedem Radsatz 14, 15 bzw. dem dem Radsatz zugeordneten Mikrocomputer 20 ist die Ident-Nummer "v" für den vorderen Radsatz 14 und "h" für den hinteren Radsatz eines Waggons 12 zugeordnet. Im Beispiel der Fig. 4 weist der im Zug 10 erste Radsatz 14 daher die Ident-Nummer Av, der zweite Radsatz 15 die Ident-Nummer Ah, der dritte Radsatz die Ident-Nummer Bv, der vierte Radsatz die Ident-Nummer Bh, usw. und der letzte Radsatz 15 des Waggons D die Ident-Nummer Dh auf.

In Fig. 5 ist der gleiche schienengebundene Zug 10 nach beliebigem Rangieren der Waggons 12 erneut zusammengestellt, wobei die Waggons 12 nicht mehr wie in Fig. 4 geordnet zusammengekoppelt werden konnten. Nach dem beschriebenen Verfahren wird nunmehr an das von der Zentralstelle 26 an den ersten Radsatz des Zugs 10 übergebene Datentelegramm von dessen Mikrocomputer 20 um die Ident-Nummer Av dieses Radsatzes ergänzt und an den zweiten Radsatz in der Reihenfolge weitergegeben, dort um die Ident-Nummer Ah ergänzt, an den dritten Radsatz weitergegeben, dort um die Ident-Nummer Cv ergänzt, dann an den vierten Radsatz weitergegeben und dort um die Ident-Nummer Ch ergänzt, anschließend an den fünften Radsatz weitergegeben und dort um die Ident-Nummer Dh ergänzt, an den sechsten Radsatz weitergegeben und dort die Ident-Nummer Dv hinzugefügt, dann weiter an den siebten Radsatz im Zug 10 übergeben, dort um dessen Ident-Nummer Bh ergänzt und an den letzten, achten Radsatz übergeben, bei dem die Ident-Nummer Bv dieses Radsatzes hinzugefügt wird. Schließlich wird das um die insgesamt acht Ident-Nummern erweiterte Datentelegramm über die Datenleitung 21 an den Zentralrechner 25 in der Zentralstelle 26 übergeben. Der Zentralrechner 25 erstellt die in Fig. 6 dargestellte Zuordnungstabelle 28, in der die Radsätze in ihrer Reihenfolge im Zug 10 durchnumeriert sind. In diese Zuordnungstabelle 28 werden die Ident-Nummern in der Reihenfolgen, wie sie an das Datentelegramm angehängt sind, eingelesen, so dass die Position eines jedem Radsatzes innerhalb des Zugs 10 in der Zentralstelle 26 bekannt sind. Ändert der Zug 10 seine Fahrtrichtung so braucht lediglich die Reihenfolge der Positions-Nummern vertauscht zu werden, wobei nunmehr der Radsatz mit der Ident-Nummer Bv die Position Nr. 1 im Zug 10 und der Radsatz mit der Ident-Nummer Av die letzten Position (Position Nr. 8) im Zug 10 einnimmt.

Mittels der Zuordnungstabelle 28 können die in der Zentralstelle 26 aus der Analyse der Radsatz-Geräuschmuster erkannten Schäden richtigerweise der Gleisstrecke 11 oder den Radsätzen 14, 15 zugeordnet werden und, wenn sie den Radsätzen 14, 15 zugehörig sind, dem richtigen Radsatz 14, 15 zugewiesen werden. Wird beispielsweise in dem Drehgestell-Geräuschmuster des an Position Nr. 4 im Zug 10 sich befindenden Radsatzes ein Schaden festgestellt, so wird dieser Schaden richtigerweise auch dem Radsatz mit der Ident-Nummer Ch zugeordnet. Da im Zentralrechner 25 die im bisherigen Zugbetrieb mit unterschiedlich zusammengestellten Waggons 12 erkannten Schäden an einzelnen Radsätzen 14, 15 protokolliert und in einem Störverzeichnis abgelegt sind, kann festgestellt werden, ob es sich um den gleichen bereits geschädigten Radsatz handelt oder ob an einem bisher unbeschädigten Radsatz ein neuer Schaden aufgetreten ist.

## Patentansprüche

1. Verfahren zur Erkennung der Radsatzreihenfolge innerhalb eines schienengebundenen Zugs (10), der aus beliebig aneinander ankoppelbaren, jeweils mit mindestens zwei Radsätzen (14, 15) ausgestatteten, einzelnen Waggons (12) zusammengestellt ist, **dadurch gekennzeichnet, dass** jedem Radsatz (14, 15) eines Waggons (12) eine Identifikations-Marke zugeordnet wird, dass bei jedem Radsatz (14, 15) aufeinanderfolgend ein von einem in der Reihenfolge vorhergehenden Radsatz (14) erhaltenes Datentelegramm mit der Identifikations-Marke des Radsatzes (14) ergänzt und an den in der Reihenfolge nachfolgenden Radsatz (15) übergeben wird und dass von einer Zentralstelle (26) aus das Datentelegramm an den in der Reihenfolge ersten Radsatz (14) übergeben wird und von dem in der Reihenfolge letzten Radsatz (15) aus das um alle Identifikations-Marken der vorhergehenden Radsätze (14, 15) erweiterte Datentelegramm an die Zentralstelle (26) übergeben wird.

2. Verfahren nach Anspruch 1, **dadurch gekennzeichnet, dass** die Reihenfolge der Radsätze (14, 15) durch die Fahrtrichtung des Zugs (10) in der Weise vorgegeben wird, dass der in der Reihenfolge erste Radsatz (14) der im Zug (10) vorderste Radsatz (14) ist.

3. Verfahren nach Anspruch 2, **dadurch gekennzeichnet, dass** die Fahrtrichtung mittels eines bidirektionalen Beschleunigungssensors (27) gemessen wird.

4. Verfahren nach Anspruch 3, **dadurch gekennzeichnet, dass** die Fahrtrichtung durch Vergleich mit einer Laufgeräuschmessung verifiziert wird.

5. Verfahren nach einem der Ansprüche 2 - 4, **dadurch gekennzeichnet, dass** in der Zentralstelle (26) eine Zuordnungstabelle (28) erstellt wird, in der die Identifikations-Marken in der durch die Fahrtrichtung festgelegten Reihenfolge der Radsätze (14, 15) im Zug (10) angeordnet sind.

6. Verfahren nach Anspruch 5, **dadurch gekennzeichnet, dass** bei Wechsel der Fahrtrichtung des unveränderten Zugs (10) in der Zuordnungstabelle (28) eine Vertauschung der Reihenfolge vorgenommen wird.

7. Verfahren nach einem der Ansprüche 1 - 6, **dadurch gekennzeichnet, dass** der Zentralstelle (26) die Anzahl der im Zug (10) vorhandenen Waggons (12) und deren Radsätze (14, 15) angegeben wird und dass in der Zentralstelle (26) die Gesamtzahl der Radsätze (14, 15) im Zug (10) mit der Anzahl der Identifikations-Marken in dem von dem letzten Radsatz (15) im Zug (10) erhaltenen Datentelegramm verglichen und bei Nichtübereinstimmung eine Fehlermeldung erzeugt wird.

8. Vorrichtung zur Erkennung der Radsatzreihenfolge innerhalb eines schienengebundenen Zugs (10), der aus beliebig aneinander ankoppelbaren, jeweils mit mindestens zwei Radsätzen (14, 15) ausgestatteten, einzelnen Waggons (12) zusammengestellt ist, **dadurch gekennzeichnet, dass** jedem Radsatz (14, 15) ein Mikrocomputer (20) mit einer Identifikations-Marke zugeordnet ist und die Mikrocomputer (20) durch Datenübertragungsstrecken (21) miteinander verbunden sind, dass jeder Mikrocomputer (20) so eingerichtet ist, dass er an ein über eine Datenübertragungsstrecke (21) erhaltenes Datentelegramm seine Identifikations-Marke anhängt und das um seine Identifikations-Marke erweiterte Datentelegramm über eine Datenübertragungsstrecke (21) an den in der Reihenfolge nachfolgenden Mikrocomputer (20) weiterleitet, und dass der dem in der Reihenfolge ersten Radsatz (14) zugeordnete erste Mikrocomputer (20) und der dem in der Reihenfolge letzten Radsatz (15) zugeordnete letzte Mikrocomputer (20) jeweils über eine Datenübertragungsstrecke (21) mit einem Zentralrechner (25) verbunden sind.

9. Vorrichtung nach Anspruch 8, **dadurch gekennzeichnet, dass** der Zentralrechner (25) das Datentelegramm generiert und an den ersten Mikrocomputer (20) im Zug (10) übergibt und aus dem vom letzten Mikrocomputer (20) erhaltenen Datentelegramm mit allen folgerichtig anhängenden Identifikations-Marken eine Zuordnungstabelle (28) erstellt, in der die Identifikations-Marken in der durch die Fahrtrichtung des Zugs (10) festgelegten Reihenfolge der Radsätze (14, 15) im Zug (10) angeordnet sind.

10. Vorrichtung nach Anspruch 8 oder 9, **dadurch gekennzeichnet, dass** die Datenübertragungsstrecken zwischen Mikrocomputern (20), die den Radsätzen (14, 15) eines Waggons (12) zugeordnet sind, als feste Datenleitungen (21) ausgebildet sind.

11. Vorrichtung nach einem der Ansprüche 8 - 10, **dadurch gekennzeichnet, dass** die Datenübertragungsstrecken zwischen Mikrocomputern (20), die Radsätzen (14, 15) an verschiedenen Waggons (12) zugeordnet sind, als durch Verbindungsstecker (23) koppelbare Datenleitungen (21) ausgebildet sind.

12. Vorrichtung nach einem der Ansprüche 8 - 10, **dadurch gekennzeichnet, dass** die Datenübertragungsstrecken zwischen Mikrocomputern (20), die Radsätzen (14, 15) an verschiedenen Waggons (12) zugeordnet sind, als Datenfunkstrecken ausgebildet sind.

13. Vorrichtung nach Anspruch 12, **dadurch gekennzeichnet, dass** an jeder Stirnseite der Waggons (12) eine Sende/Empfangseinheit (24) angeordnet ist und dass die beiden Sende-/Empfangseinheiten (24) über Datenleitungen (21) mit den innerhalb des Waggons (12) angeordneten Mikrocomputern (20) verbunden sind.

14. Vorrichtung nach Anspruch 13, **dadurch gekennzeichnet, dass** jede Sende-/Empfangseinheit (24) einen Sender (241) und einem Empfänger (242) aufweist.

15. Vorrichtung nach einem der Ansprüche 10 - 14, **dadurch gekennzeichnet, dass** die Datenleitungen (21) als elektrische Kabel oder Lichtwellenleiter ausgebildet sind.
